(19) **Europäisches Patentamt / European Patent Office / Office européen des brevets**

(11) **EP 4 141 726 A1**

(12) **EUROPEAN PATENT APPLICATION**

(43) Date of publication:
**01.03.2023 Bulletin 2023/09**

(21) Application number: **21306139.3**

(22) Date of filing: **24.08.2021**

(51) International Patent Classification (IPC):
**G06F 30/13** (2020.01)   **G06F 30/27** (2020.01)
**G06F 111/20** (2020.01)   **G06F 111/04** (2020.01)
**G06F 111/16** (2020.01)   **G06F 111/06** (2020.01)

(52) Cooperative Patent Classification (CPC):
**G06F 30/13; G06F 30/27;** G06F 2111/04;
G06F 2111/06; G06F 2111/16; G06F 2111/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes
78140 Vélizy-Villacoublay (FR)**

(72) Inventors:
• **DURAND, Tom
78946 VELIZY VILLACOUBLAY CEDEX (FR)**
• **MARCUSANU, Ana
78946 VELIZY VILLACOUBLAY CEDEX (FR)**

(74) Representative: **Atout PI Laplace
Immeuble "Visium"
22, avenue Aristide Briand
94117 Arcueil Cedex (FR)**

(54) **METHOD FOR AUTOMATICALLY FURNISHING A 3D ROOM BASED ON USER PREFERENCES**

(57)   A computer-implemented method for automatically furnishing a 3D room based on user preferences, comprising the steps of:
a) obtaining:
- at least one spatial relations graph (GR) of a virtual 3D room;
- a set of user preferences (UP);

b) converting the set of user preferences (UP) into a set of target parameters ($t_{kpi\_param}$);
c) computing, for each spatial relations graph:
- a set of Key Performance Indicator values (KPIV), and

- a KPI distance ($dist_{KPI}$),

d) automatically selecting at least one most promising spatial relations graph (MPGR);
e) instantiating the most promising spatial relations graph (MPGR) into the 3D room to be furnished;
f) displaying the furnished virtual 3D room proposal (FP) to the user;
g) receiving an update of the user preferences (UP);
h) reiterating steps a) to g) until a stopping criterion is fulfilled.

Fig. 1

**Description**

The invention pertains to the field of computer-aided design of furnished rooms. In particular, the invention relates to a computer-implemented method for automatically furnishing a 3D room based on user preferences.

Consumers who plan to move in in a new apartment, or who simply plan to renovate a room, usually find inspiration from similar projects in furniture stores, or they can also do it by using CAD software. Thus, the consumer projects himself in the new room.

Some existing methods to automatically create templates of indoor rooms are based on classic optimization techniques, and use a set of furniture as input to arrange into a given room. The drawback of such approaches is that it implies defining a set of constraints manually (which spaces around each objects should be left free, which objects are to be next to other ones, etc.) which takes a considerable amount of time and prone to error.

An example of method based on classic optimization techniques is disclosed in "Automated Interior Design Using a Genetic Algorithm" (Peter Kan et al., Proceedings of VRST2017, Gothenburg, Sweden, November 2017). The optimization process uses a genetic algorithm, which starts from a random solution, so as to automatically populate indoor virtual scenes with furniture objects and optimize their positions and orientations with respect to aesthetic, ergonomic and functional rules. The drawbacks of such approach is that it implies defining a set of constraints manually (which spaces around each objects should be left free, which objects are to be next to other ones, etc...) and the parameters for the optimization are fixed on values defined as "ideal". However, it is more difficult for the user to have a customized solution that takes into account his personal preferences.

User-in-the-loop methods ask for user inputs during the optimization process to guide the furnishing of the room. In "Interactive Furniture Layout Using Interior Design Guidelines" (Paul Merrell et al., Siggraph 2011, August 2011), the user can manually design constraints for specific pieces of furniture. After each iteration, the method proposes a few solutions, which satisfy the constraints but which are not necessarily optimized solutions. The user can select his favorite solutions or manually move around furniture before launching a new iteration that takes into account his new inputs. This approach requires a substantial amount of heavy interactions with the user in order to propose a pleasing and optimized layout.

Approaches based on deep-learning leverage huge databases of indoor scenes in order to learn how to furnish new rooms automatically, as disclosed for example in "PlanIT: planning and instantiating indoor scenes with relation graph and spatial prior networks" (Wang, K. et al., ACM Trans. Graph., Vol. 38, No. 4, Article 132, July 2019). However, the solution which is disclosed in the article does not enable the user to customize the proposed furnished room. In other words, the user is not "in the loop".

Therefore, there is a need for obtaining a computer-implemented method for method for automatically furnishing a 3D room based on user preferences, which is iterative, and which can be easily customizable.

An object of the present invention is a computer-implemented method for automatically furnishing a 3D room based on user preferences, comprising the steps of:

a) obtaining:

- at least one spatial relations graph of a virtual 3D room comprising 3D elements, based on spatial relations between the 3D elements of the virtual 3D room, said 3D elements comprising 3D architectural elements and 3D furnishing objects located in the furnished virtual 3D room;
- a set of user preferences related to the furnishing of the 3D room;

b) converting the set of user preferences into a set of target parameters, each target parameter being assigned to a respective KPI, said KPI corresponding to a measure concerning the furnishing of the 3D room;

c) computing, for each spatial relations graph:

- a set of Key Performance Indicator values, based on the spatial relations graph and based either on the corresponding target parameter or on a dataset which maps spatial relations graphs to Key Performance Indicator values with respect to each target parameter, and
- a KPI distance, which corresponds to an aggregation of all the KPI values;

d) automatically selecting at least one most promising spatial relations graph, said most promising spatial relations graph being the spatial relations graph having the lowest KPI distance;

e) instantiating the most promising spatial relations graph into the 3D room to be furnished with the 3D furnishing objects of the most promising spatial relations graph, thereby providing a furnished virtual 3D room proposal;

f) displaying the furnished virtual 3D room proposal to the user;

g) receiving an update of the user preferences;

h) reiterating steps a) to g) until a stopping criterion is fulfilled.

Additional features and advantages of the present invention will become apparent from the subsequent description, taken in conjunction with the accompanying drawings:

- Figure 1 illustrates the invented method;
- Figure 2 illustrates a spatial relations graph;
- Figure 3 illustrates an example of user interface on which the method may be implemented;
- Figure 4 illustrates a spatial relations graph along with the furnished virtual 3D room proposal;
- Figure 5 illustrates some numerical values of target parameters, KPI values and user preferences;
- Figures 6 and 7 illustrate examples 3D furnished rooms;
- Figure 8 illustrates a block diagram of a computer system suitable for carrying out a method according to different embodiments of the invention.

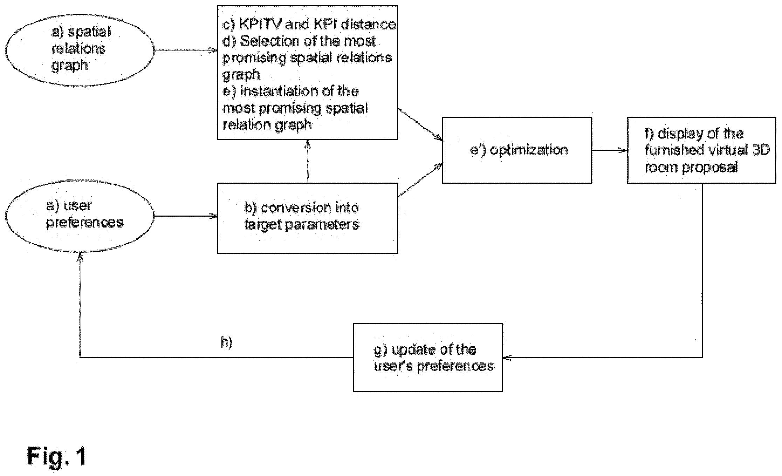

Figure 1 illustrates the invented method. In a first step a), at least one spatial relations graph GR of a virtual 3D room is obtained. In what follows, it will be considered that a plurality of spatial relations graph GR is obtained, although the method could be implemented with only one spatial relations graph GR as well.

The spatial relations graphs GR may be stored in a graph database, based on 3D rooms which are initially provided by individuals or by professionals (e.g. furniture retailers, real estate agents, architects). Alternatively, the spatial relations graphs may be automatically generated, with a deep autoregressive model, as disclosed for example in the article "PlanIT: planning and instantiating indoor scenes with relation graph and spatial prior networks" (Wang, K. et al., ACM Trans. Graph., Vol. 38, No. 4, Article 132, July 2019). The spatial relations graphs may also be manually created by a user, although that would be cumbersome.

The following definitions are provided for a better understanding of the invention:

3D room: corresponds to a 3D definition of a room, the minimal information required being the set of walls (and their position and dimension).

3D furnishing objects: furniture or decorative objects to put in the room in order to furnish it. It excludes all architectural objects such as room separators (walls and implicit separators), doors and windows.

3D_Openings: Set of doors and windows of the room.

3D_Separators: Set of room separators (walls and implicit separators).

3D architectural elements = 3D_Openings U 3D_Separators.

3D elements: 3D_Objects U 3D_Archs.

Furnish: corresponds to the task of furnishing a 3D room, i.e. place one or several 3D furnishing objects in a room.

Spatial relations graph: a graph with a list of nodes corresponding to the objects in the room (furniture and architectural features) and a list of edges representing the pairwise spatial relations between the aforementioned objects.

It can be noted that the graph is connected and acyclic and comprises:

- A list of nodes that each corresponds to a 3D element in the room with the following attributes:

  ◦ the node ID;
  ◦ the category of the 3D element;
  ◦ the 3D bounding box of the 3D element (length, width and height);
  ◦ the transformation matrix of the 3D element (to obtain the absolute position and orientation in the 3D room of the 3D element, mandatory for 3D architectural elements but optional 3D furnishing objects, i.e. only if some objects are already present in the room and the user wants to keep them);
  ◦ the corresponding 3D model for each 3D element;
  ◦ the list of ingoing edges;
  ◦ the list of outgoing edges;
  ◦ superstructure tag if any, i.e. a group of one or several functional relations between objects so they represent a functional arrangement of furniture;
  ◦ the corresponding 3D model for each 3D element;
  ◦ Optional: list of 3D model that can be used for replacement of the initial 3D model;

- A list of edges to represent the relations between the 3D element in the room with the following attributes:

  ◦ An edge ID;

◦ The ID of the starting node;
◦ The ID of the ending node;
◦ A direction (e.g. "front", "back", "left", "right", "support");
◦ An optional tag (e.g. "contained");
◦ A functionality (optional);
◦ A distance tag, for instance:

▪ "adjacent" if the minimal distance between the bounding box of the starting node of the edge and the bounding box of the ending node of the edge is less than an "adjacent" threshold (e.g. 5cm);
▪ "proximal" if the minimal distance between the bounding box of the starting node of the edge and the bounding box of the ending node of the edge is greater that the "adjacent" threshold and less that another "proximal" threshold (e.g. 50cm);
▪ "distant" if the minimal distance between the bounding box of the starting node of the edge and the bounding box of the ending node of the edge is greater that the "proximal" threshold;

◦ Superstructure tag if any;
◦ The exact distance value between the bounding box of the starting node of the edge and the bounding box of the ending node;

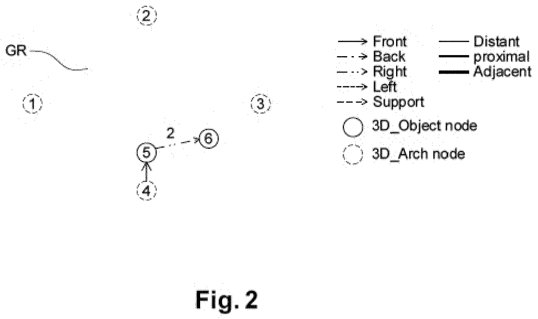

Figure 2 illustrates an example of a graph which has been extracted with the aforementioned features, with the corresponding legend (type of node, orientation, distance tag, support).
The node 5, which corresponds to a 3D furnishing object, can be described as follows:
node5": {

- "category": "Double beds",
- "macro-category": "bed",
- "transformation_matrix": [0, 1, 0, 0, -1, 0, 0, 0, 0, 0, 1, 0, -13302.5, - 5203.2, 455.0, 1],
- "bounding_box": [2000, 1800, 1000],
- "ingoing_edges": [edge1],
- "outgoing_edges": [edge2],
- "parents": ["floor", "default"],
- "superstructure_tags": []

}
The edge 2, which connects the nodes 5 and 6, can be described as follows:
"edge2": {

- "starting_node": "node5",
- "ending_node": "node6",
- "direction": "Right",
- "optional_tag": "normal",
- "distance_tag": "Proximal",
- "distance_value": 25, #mm
- "superstructure_tag": []

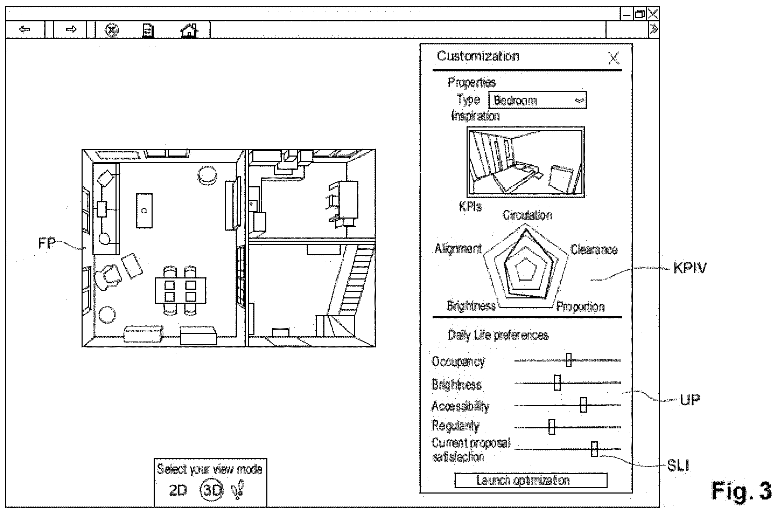

}
A set of user preferences UP related to the furnishing of the 3D room is also obtained in step a) of the invented method.
User preferences are defined as user-friendly metrics based on a combination of Key Performance Indicators that allow the user to evaluate the performance of the room accordingly to its personal opinion.
Key Performance Indicators (KPI) are defined as interior design guidelines which are used to assess the quality of the furniture arrangement in the 3D room.
The user preferences UP are provided by the user, for example through a dedicated user interface, illustrated by figure 3.
The user preferences UP may be, for example:

- Brightness: refers to the luminosity level the user wants for the room.
- Accessibility: describes the level of accessibility of items and spaces in the room. (For example, the accessibility must be very high if the room is to be used by disabled people).
- Occupancy: refers to the rate of space occupancy wanted in the room and the free space left around objects. The occupancy must be low if we want a room in a minimalist style.
- Regularity: refers to the harmony of the arrangement in terms of repartition and alignment of the furniture inside the room. A very regular room is a room where all the furniture are aligned in the wall's axes and organized in superstructures, which respect the clearance constraints of the furniture and the ability to walk all around the room.

The user preferences UP can be presented to the user as interactive cursors that can be moved along a numbered axis (from -1 to 1 for example) to show which ones he cares the most about. (e.g. to the far left if no care is given to the preference considered or far right if it is very important).

As an example, the user preferences UP can be set and updated by the user by means of sliders SL, each slider SLI corresponding to a user preference. In another embodiment, the user preferences UP can be set to default values, in particular for the first iteration of the invented method.

Then in step b) of the invented method, the set of user preferences UP are converted into a set of target parameters $t_{kpi\_param}$, each target parameter being assigned to a respective KPI.

In a preferred embodiment, the target parameter of a KPI $t_{kpi\_param}$ is computed with the formula:

$$t_{kpi\_param} = \max(0, \text{Proposal}_{kpi\_param} + \alpha_{kpi\_param}\delta_{kpi\_param})$$

wherein $\text{Proposal}_{kpi\_param}$ corresponds to a target parameter of the KPI at the preceding iteration, or a standard value for a first iteration of the method;

$$\alpha_{kpi\_param} = \sum_{p=0}^{N_{kpi}} w_p \times w_{kpi\_param};$$

$\delta_{kpi\_param}$ is a constant evolution rate;
$N_{kpi}$ is the number of user preferences impacting the Key Performance Indicator;
$w_p$ is the weight of the user preference, provided by the user;
$w_{kpi\_param}$ is the weight of the preference on the KPI parameter.

Each user preference affects one or several KPI values:

Occupancy: influences the KPIs Proportion and Clearance
Brightness: influences the KPI Brightness
Accessibility: influences the KPIs Clearance and Circulation
Regularity: influence the KPIs Alignment, Circulation and Clearance

For instance:

$$\text{Proportion}: r_v = r_{v\_prev} + \delta_{r_v}(w_{Occ}w_{OccProp})$$

With $\delta_{r_v}$ = 0.1 and $w_{OccProp}$ = 0.8

$$\text{Clearance}: \varepsilon_c = \varepsilon_{c_{prev}} + \delta_{\varepsilon_c}(w_{Occ}w_{OccClear} + w_{Acc}w_{AccClear} + w_{Reg}w_{RegClear})$$

With $\delta_{\varepsilon_c}$ = 0.1, $w_{OccClear}$ = -0.1, $w_{AccClear}$ = 0.5 and $w_{RegClear}$ = 0.2

$$\text{Circulation}: r_{max} = r_{max\_prev} + \delta_{r_{max}}(w_{Acc}w_{AccCirc} + w_{Reg}w_{RegCirc})$$

With $\delta_{r_{max}}$ = 0.1, $w_{AccCirc}$ = 0.5 and $w_{RegCirc}$ = 0.3

$$\text{Brightness}: r_l = r_{l_{prev}} + \delta_{r_l}(w_{Bright}w_{BrightBright})$$

With $\delta_{r_l} = 0.1$, $w_{BrightBright} = 1$

$$\text{Alignment}: t_{al} = t_{al_{prev}} + \delta_{t_{al}}(w_{Reg}w_{RegAl}) \text{ and } t_{sup} = t_{sup_{prev}} +$$

$$\delta_{t_{sup}}(w_{Reg}w_{RegAl})$$

With $\delta_{t_{al}} = \delta_{t_{sup}} = 0.1$ and $w_{RegAl} = 0.5$

Note that if the result of this computation for the new value of the parameter is negative, we give it the value 0 (a negative value does not make sense for a KPI).

For an ordinary user, some of the KPI may not be clear, and he does not understand the definition of these metrics. However, the user preferences are clearer, thus the conversion of user preferences into Key Performance Indicators makes the process more understandable.

In a third step c) of the method, a set of Key Performance Indicator values KPIV are computed for each spatial relations graph.

The Key Performance Indicator values KPIV may be computed based on the spatial relations graph GR, and based on a dataset which maps spatial relations graph to Key Performance Indicator values with respect to each KPI parameter $t_{kpi\_param}$.

Supposing that we have a dataset of several 3D furnished rooms. Since we are able to obtain both the relationship graph and the KPIs values from a 3D furnished room with respect to each target parameter $t_{kpi\_param}$, we can construct a dataset mapping relationship graphs to KPIs values with respect to each target parameter $t_{kpi\_param}$. Therefore, the a priori probabilities of certain KPIs values for a certain graph with respect to each target parameter $t_{kpi\_param}$ can be approximated by a machine-learning model, namely a neural network, trained in a supervised manner.

Such neural network takes as input a graph and a set of target parameters $t_{kpi\_param}$ and outputs a value for each KPI considered. The most direct way to construct such architecture is to use a GNN (graph neural network), as disclosed in "PlanIT: planning and instantiating indoor scenes with relation graph and spatial prior networks" (Wang, K. et al., ACM Trans. Graph., Vol. 38, No. 4, Article 132, July 2019), with a N-dimensional vector as output, N being the number of KPIs considered.

In another embodiment, the Key Performance Indicator values KPIV may be computed based on the spatial relations graph GR and based on the corresponding target parameter $t_{kpi\_param}$.

Concerning the brightness KPI: The 3D room to be furnished should have a brightness adapted to its size and its use. Thus, the brightness is measured by evaluating the number of light sources (windows, glass doors and lamps) compared to the volume of the room. This value can be optionally refined by the distance between these light sources and lighting points of interest in the spatial relations graph (like desks, tables...). Thus, the brightness can be defined as follows:

$$g_{bright}(r_l) = \left\| r_l - \frac{\sum_{i=0}^{L} c_i}{V} \right\| + \frac{\sum_{i \in L_{PoI}} \min_{j \in L} d(i, j)}{|L_{PoI}|}$$

Where $r_l$ is the target parameter $t_{kpi\_param}$ relative to brightness, $c_i$ the lighting coefficient of the $i^{th}$ light source in the room (some light sources have less lighting power than others, $c_i \in [0,1]$), L the number of light sources in the room, V is the volume of the room and $L_{PoI}$ the objects considered as light points of interest.

Concerning the proportion KPI: The 3D furnishing objects of the spatial relations graph should have appropriate proportions to the 3D room to be furnished and to each other. The cost for this KPI is modeled as the ratio of the volume covered by the objects to the room volume:

$$g_{prop}(r_v) = \left\| r_v - \frac{V_0}{V_r} \right\|$$

$V_0$ is the volume of all 3D furnishing objects together and $V_r$ is the total volume of the 3D room to be furnished. Their ratio is compared with the target parameter $r_v$.

Concerning the clearance KPI: the 3D furnishing objects of the spatial relations graph require an empty space around them to be used for their primary function. Some objects require direct access from one or more sides. The clearance guideline represents this requirement.

The clearance KPI is modelled as the amount of overlap between 3D furnishing objects' bounding boxes extended by clearance constraints $\varepsilon_c$ (defined as the target parameter for clearance). To define the clearance constraints, the lack of edges is used in the spatial relations graph GR from each 3D furnishing objects' sides, and clearance bounding boxes are defined in the spaces that should remain free (i.e. on the sides of the objects without adjacent constraints).

$$g_{clear}(\varepsilon_c) = \frac{1}{|A(\varepsilon_c)|(|A(\varepsilon_c)| - 1)} \sum_{b_1 \neq b_2 \in A} \frac{V(b_1 \cap b_2)}{V(b_1)}$$

Where A is the set of extended (by $\varepsilon_c$) bounding boxes (with the clearance space) of the furniture in the room.

Concerning the circulation KPI: it is checked whether the free space 3D room to be furnished (walkable space) is not divided into several disjoint spaces (lost space in the room if it is the case). This is done in three main steps: In the first step, all 3D furnishing objects and walls of the 3D room to be furnished are projected to the ground plane and rasterized into a 2D grid.

In the second step, a dilation operation is applied on these projections to account for the body size. This operation dilates the discrete projections by a disk of the specified human body radius (of variable length).

In the third step, the polygon representing the free space in the 3D room (i.e. "walkable" spaces) is computed, and it is verified that it is not composed of disjoint polygons (ignoring polygons below a certain area to avoid counting small corners as significant lost space e.g. 20 cm$^2$).

For several body radiuses $r_i$ (R discrete radius values from $r_{min}$ = 15 cm to $r_{max}$ defined as the targeted circulation radius), the number of disjoint polygons $n_{d,r_i}$, representing the walkable area inside the room is computed. The KPI value $g_{circ}(r_{max})$ for circulation is computed as follows:

$$g_{circ}(r_{max}) = 1 - \frac{1}{R} \sum_{r_i}^{r_{max}} \frac{1}{n_{d,r_i}}$$

A special attention is paid to the circulation, if the user has wheelchair or a stroller.

Concerning the alignment KPI: In interior design, the objects should be properly oriented and aligned to their supporting surfaces. Additionally, the proportion of pieces of furniture that are involved in superstructures to assess a level of regularity of the room is computed. The alignment value $g_{align}(t_{al}, t_{sup})$ is evaluated as follows:

$$g_{align}(t_{al}, t_{sup}) = \left\| t_{al} - \frac{\sum_{obj \in Obj} \beta_{obj} \times \min_{\overrightarrow{v_W} \in V_W} |\overrightarrow{v_{obj}} \cdot \overrightarrow{v_W}|}{|Obj|} \right\| + \left\| t_{sup} - \frac{|Obj| - |S|}{|Obj|} \right\|$$

Obj is the set all 3D furnishing objects, $\overrightarrow{v_{obj}}$ is the front vector of the 3D furnishing object obj and $\beta_{obj}$ is a factor proportional to the size of obj ($\beta_{obj} \in [0,1]$). $V_W$ is the set of front vectors of all the walls of the 3D room to be furnished. S is the set of nodes involved in one or more superstructures and 0 is the set of objects in the room (without architectural elements). $t_{al}$ and $t_{sup}$ are target parameters respectively for alignment and superstructure presence.

All the target parameters $t_{kpi\_param}$ mentioned in the KPIs definitions are computed from preferences given by the user.

Alternatively, the target parameters $t_{kpi\_param}$ correspond to standard values found either in the literature (e.g. in "Automated Interior Design Using a Genetic Algorithm", Peter Kan et al., Proceedings of VRST2017, Gothenburg, Sweden, November 2017) or experimentally (e.g. extracted from a dataset).

Standard values may be preferably used for the first iteration of the invented method.

Here is an example of standard target parameters that can be used for the KPIs and the acceptable range of values for these KPIs:

$r_l = 0.5$ and $r_l \in [0,1]$
$r_v = 0.25$ and $r_v \in [0,1]$
$\varepsilon_c = 300$ (mm) and $\varepsilon_c \in [0,1000]$
$r_{max} = 200$ (mm) and $r_{max} \in [150,500]$
$t_{al} = 0$ and $t_{al} \in [0,1]$
$t_{sup} = 0.5$ and $t_{sup} \in [0,1]$

Then, a KPI distance $dist_{KPI}$, which corresponds to an aggregation of all the KPI values KPIV, is computed, for each of the spatial relations graphs GR. The aforementioned KPI values are added:

$$dist_{KPI}(t_{\text{kpi\_param}}) = g_{clear}(t_{clear}) + g_{circ}(t_{circ}) + g_{bright}(r_l) + g_{prop}(r_v) + g_{align}(t_{sup})$$

Therefore, several distances $dist_{KPI}$ are computed, i.e. one for each graph.

In a fourth step d), at least one most promising spatial relations graph MPGR is automatically selected. The most promising spatial relations graph MPGR is the spatial relations graph GR which has the lowest KPI distance $dist_{KPI}$.

In a fifth step e), the most promising spatial relations graph MPGR is instantiated into the 3D room to be furnished with the 3D furnishing objects of the most promising spatial relations graph MPGR. The 3D furnishing objects corresponding to each of the nodes of the most promising spatial relations graph MPGR are placed in the 3D room to be furnished, according to the precise spatial configuration which is defined by the edges of the most promising spatial relations graph MPGR.

The furnished virtual 3D room proposal FP corresponds to the instantiation of the most promising spatial relations graph MPGR.

Advantageously, and supposing that the graphs are directed, the step of instantiation of the most promising spatial relations graph MPGR comprises a first sub-step of ordering nodes of the 3D furnishing objects by the number of incoming relations they have, then descending by the number of outgoing relations and finally by their size. Thus, it is considered how constrained and constraining each node is, and the superstructures are taken into account. This allows to instantiate the objects by groups, starting by big objects and their related objects.

It is reminded that superstructures correspond to special patterns in the spatial relations graph. For instance, three objects categories or more linked in the same way, i.e. with the same edges in several projects in a number of projects Np sufficient so that Np/Number_Of_Projects is superior to a certain threshold t (e.g. 0.2) could be considered as a potential superstructure. Note that superstructures could also correspond to a group of one or several functional relations between objects so they represent a functional arrangement of furniture (e.g. water supply with dishwasher, sink and gas stove in kitchens). In this case, we may consider superstructures that are predefined per room type. The skilled person may refer to the definition of a superstructure and to the detection of superstructures, provided in Annex A.1 of "PlanIT: planning and instantiating indoor scenes with relation graph and spatial prior networks" (Wang, K. et al., ACM Trans. Graph., Vol. 38, No. 4, Article 132, July 2019), and which is incorporated by reference.

The step of instantiation comprises a second sub-step, wherein, for each node of a 3D furnishing object, according to a descending order, a valid subspace area is computed, including the following stages:

- The initial valid subspace may be instantiated as the free floor space of the whole 3D room to be furnished, so as to avoid conflicts with already instantiated objects.
- For each incoming relation, sorted by distance value (closest to furthest):

  ◦ Computing of the associated area where the object could be instantiated in the referential of the object at the starting end of the relation. Then this area is transformed into the referential of the node n.

  ◦ Intersection of this area with the previous value of the valid subspace.

  ◦ If the intersection is not empty then the valid subspace takes the value of this intersection. Else, the process is stopped, and the last value of the valid subspace is kept.

Lastly, the object is instantiated in the middle of the valid subspace.

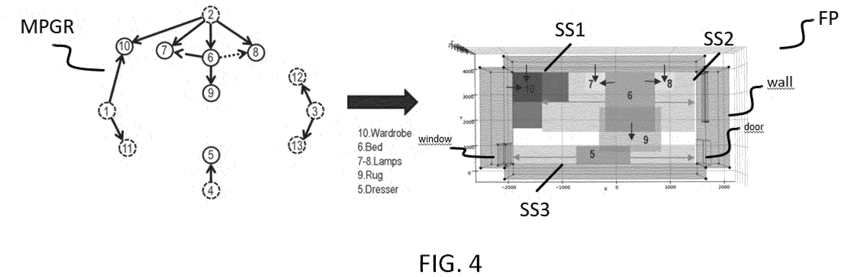

Figure 4 illustrates the creation of different valid subspaces. The first subspace SS1 corresponds to the valid subspace of the wardrobe 10, the second subspace SS2 corresponds to the valid subspace of the bed 6, and the third subspace SS3 corresponds to the valid subspace of the dresser 5.

In a further step f), the furnished virtual 3D room proposal FP is displayed to the user, as illustrated by figure 3.

In a preferred embodiment, the set of Key Performance Indicator values KPIV is displayed along with the furnished virtual 3D room proposal FP. Therefore, the user can evaluate the performance metrics of the furnished virtual 3D room proposal FP, KPI by KPI. The Key Performance Indicator values KPIV may be displayed in the form of a radar chart (or spider chart), which is a sequence of equi-angular spokes. Each spoke represents one of the Key Performance Indicators. The data length of a spoke is proportional to the magnitude of the Key Performance Indicator. Thus, the user may, at a glance, compare different virtual 3D room proposals FP one to the other, by comparing the radar charts.

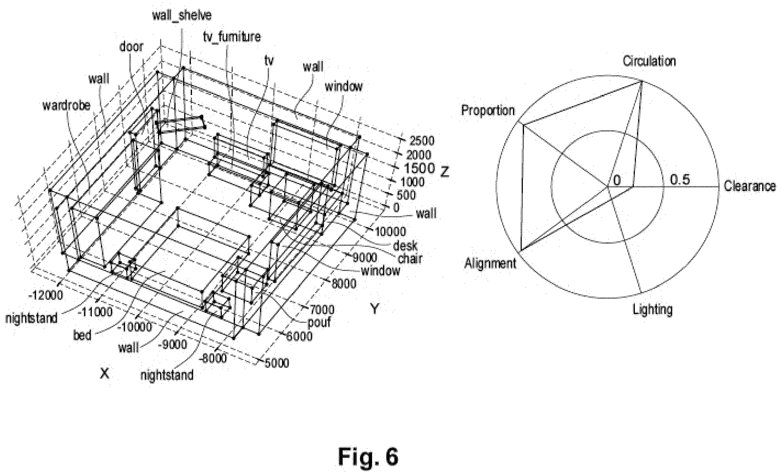

Figure 6 illustrates an example of a virtual 3D room proposals FP (only the 3D bounding boxes of the 3D furnishing objects are displayed, but the 3D furnishing objects could also be displayed), along with a radar chart of the KPI. The circulation within the room is good, since all the space is accessible by a human. The room has a high proportion because it is well filled with respect to bedrooms standards. The alignment is almost perfect, because the only object not being aligned with the walls is the wall shelf. The lighting of the room is poor because there are no lamps. The clearance is low due to the obstructed area in front of the wardrobe and in front of one of the nightstands.

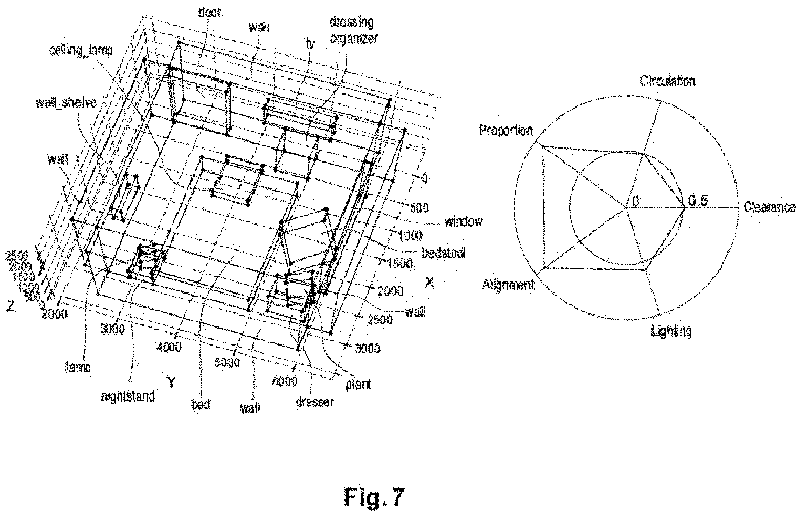

Figure 7 illustrates another example of a virtual 3D room proposals FP, along with a radar chart of the KPI. The circulation within the room is limited, since the space behind the footstool is not accessible (blocked by the footstool). The room has a good proportion because it is well filled with respect to bedrooms standards. The alignment is correct, because only three objects are not aligned with the walls. The lighting of the room is correct, because there is one window and two lamps. The clearance is tolerable but the right side of the bed is cluttered which penalizes the clearance.

When the furnished virtual 3D room proposal FP is displayed, the user may select one of the following view modes: 2D top view, 3D top view (like in figure 3), or 3D views from the point of view of a user located in the 3D room.

Then, the user preferences are updated, in step g). The user preferences UP may be updated by the user. Thus, the method is very interactive. Each user preference may be identified by an interactive cursor such as a slider SLI, as illustrated by figure 3. Each of the sliders can be moved along a numbered axis (from -1 to 1 for example), so that the user indicates which preference he cares the most about. For example, the user moves the slider to the far left if no care is given to the user preference considered, or far right if the latter is very important. Thus, the user preferences UP are updated by moving at least one of the sliders.

The user preferences UP may be updated by means of a graphical control element, or by inputting a numerical value in a dedicated window.

Then, steps a) to g) are reiterated, at least once, with the updated user preferences (step h) in figure 1). Indeed, the updated user preferences are converted into target parameters $t_{kpi\_param}$. As stated above, in the new iteration, the target parameter $t_{kpi\_param}$ depends on the target parameter at the preceding iteration, and also on a component which is computed based on the user preferences of the current iteration. Then, the most promising spatial relations graph MPGR is selected, based on the updated set of target parameters $t_{kpi\_param}$ and based on the updated set of Key Performance Indicator values KPIV, and another furnished virtual 3D room proposal is displayed to the user.

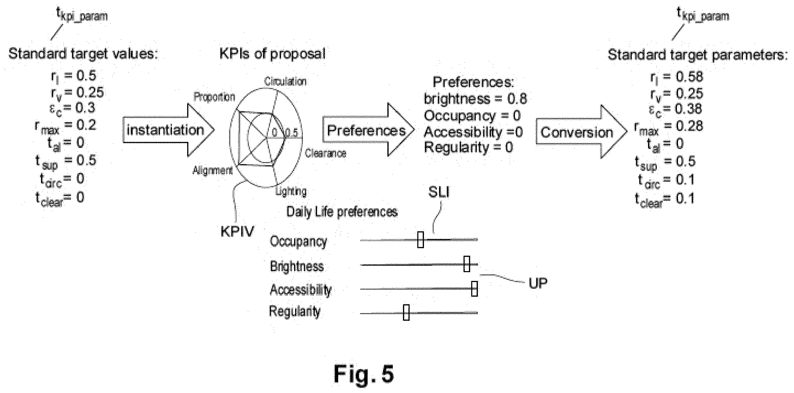

Figure 5 illustrates some numerical values of target parameters, KPI values and user preferences, after the updating of the user preferences. The method starts with the aforementioned standard values. After a first iteration of the method, the most promising spatial relations graph MPGR is instantiated into the 3D room to be furnished. KPI values of the 3D room proposal are displayed, in the form of a radar chart. Then, the user may update the user preferences, if the displayed 3D room proposal is not satisfying. The target parameters are converted and modified according to the updated user preferences.

Steps a) to g) are reiterated until a stopping criterion is fulfilled. For example, the stopping criterion may be one of the following: a predetermined number of iterations has been done. Alternatively, the user may indicate that the 3D room proposal is satisfying.

Therefore, after each iteration, a solution is proposed to the user, who can then specify his personal preferences with respect to the current solution before launching a new iteration, in order to obtain a solution that will better suit his preferences, without losing the functional coherence of the room. The furnished virtual 3D room proposal is easily customizable, so as to find a solution which better meets the user's expectations.

In another embodiment, the set of user preferences UP comprises a satisfaction criterion. If a furnished virtual 3D room proposal has already been proposed by the algorithm and the user wishes to launch a new computation, he can assess his satisfaction of the current proposed solution.

In that case, an additional slider for the satisfaction of the user according to the selected solution can be specified and will be used for the next iteration (cf. figure 3, "current proposal satisfaction").

A Graph Edit Distance $dist_{G,G}$ is computed between the most promising spatial relations graph MPGR and each of the spatial relations graph GR.

The satisfaction of the user with regards to the displayed solution may be evaluated.

If a satisfaction preference is specified, this means a new launch is done, after the user has already been suggested one or several solutions. A distance between the most promising spatial relations graph MPGR and the other spatial relations graph GR is computed. For example, the Graph Edit Distance, which is disclosed in the document "An Exact Graph Edit Distance Algorithm for Solving Pattern Recognition Problems" (Zeina Abu-Aisheh et al.), can be used.

Basically, the distance between the paths starting from the same walls on the considered graphs is computed, and those distances are summed to get a global distance between the considered graphs:

$$\text{dist}_{G,G} = \sum_{i \in W} \min_{j \in W\prime} \text{GED}(P_i, P_j)$$

Where G and G' are the graphs between which we compute a distance, $P_i$ are the paths starting from the $i^{th}$ wall of the graph G.

The proposed algorithm gets rid of the high memory consumption, and converges faster to an optimal solution.

For instance, if the GED algorithm is used to compute these distances, the following coarse weights can be used for the editing operations of the algorithm independently of the nodes and edges types:

- Node substitution: 1
- Node addition: 2
- Node deletion: 2
- Edge substitution: 0.5
- Edge addition: 1
- Edge deletion: 1

Besides, several granularities for the costs can be used either specifying different costs according to the types of nodes and edges or, to have the finest granularity, a matrix $(N + M) \times (N + M)$ can be designed for node editions costs with N and M the number of nodes of both graphs of the following form:

$$N + M \quad \begin{pmatrix} \text{substitution costs} & \text{insertion costs} \\ \text{deletion costs} & \text{zeros} \end{pmatrix}$$

And a second matrix $(E + 1) \times (E + 1)$ for the edge edition costs with E the different available types of edges:

$$E + 1 \quad \begin{pmatrix} 0 & s_{j,i} & s & \vdots \\ s_{i,j} & \ddots & s & \text{deletion costs} \\ s & s & 0 & \vdots \\ \cdots & \text{addition costs} & \cdots & 0 \end{pmatrix}$$

Based on the satisfaction assessment provided of the previous solution, the selection of the most promising graph MPGR can be guided towards a similar one (if the satisfaction was good) or towards a completely different one (if the user was not very satisfied).

For that, the satisfaction criterion sat $\in [-1,1]$ is considered, to select either the most similar graph, or a different graph, compared to the previously used one. To do so, the distances between the previous most promising graph MPGR and the others are distributed on the scale $[-1,1]$. Then, the closest one, compared to the satisfaction criterion sat, is chosen. This can be done in several ways, either by choosing a fixed number of closest graphs, or by fixing a threshold below which all the corresponding graphs are selected.

In a preferred embodiment, only the graphs having a distance $\text{dist}_{KPI}$ which is lower than a predefined threshold and/or only a predefined number of graphs having the lowest distance are taken into consideration for computing the Graph Edit Distance $\text{dist}_{G,G}$.

In any case, more than one most promising spatial relations graph MPGR may be envisioned, for each iteration of the method. For example, a plurality of furnished virtual 3D room proposal may be displayed to the user, and the iteration is made in parallel for several furnished virtual 3D room proposals.

In another embodiment, each Key Performance Indicator value KPIV may be approximated with an a priori Key Performance Indicator value APKPIV, which is computed only based on the features of the spatial relations graph. In that case, a confidence coefficient $x_{kpi}$ is associated to each Key Performance Indicator value. When computing the KPI distance $\text{dist}_{KPI}$, each a priori Key Performance Indicator value APKPIV is weighted by its corresponding confidence

coefficient $x_{kpi}$.

The following discloses formulas in order to compute a priori Key Performance Indicator values APKPIV, respectively for: brightness, proportion, clearance, circulation, and alignment.

Brightness: the brightness level can be estimated using the number of light sources nodes in the high-level representation and their mean lighting intensity according to the set of lamps available in the furniture dataset. A partial formula of the Brightness KPI can thus be used with reasonable confidence (e.g. $x_{bright}$ = 0.8) :

$$f_{bright}(r_l) = \left\| r_l - \frac{\sum_{i=0}^{L} c_i}{V} \right\|$$

Proportion: the number of non-architectural nodes N and the mean volume of the available furniture per category $\overline{V_l}$ are used for the "a priori" Occupancy KPI with moderate confidence (e.g. $x_{prop}$ = 0.7):

$$f_{prop}(r_v) = \left\| r_v - \frac{\sum_{i=1}^{N} \overline{V_l}}{V_r} \right\|$$

Clearance: the density of the graph can be used as an indicator of the clearance spaces left around objects. In this scope, the total number of adjacent constraints in the graph is divided by the total number of sides of the furniture objects in the room to obtain a "mean number of adjacent relations per object's side" (limited confidence e.g. $x_{clear}$ = 0.2):

$$f_{clear}(t_{clear}) = \left\| t_{clear} - \frac{|E_{adj}|}{4 \times |Obj|} \right\|$$

With

$$t_{clear} = t_{clear_{prev}} + \delta_{t_{clear}}(w_{Occ}w_{OccClear} + w_{Acc}w_{AccClear} + w_{Reg}w_{RegClear})$$

Circulation: to have an idea on whether a room will be accessible, the nature of the paths from one wall to any other wall in the room can be verified. If a path including at least two furniture objects (excludes objects located at room corners) connects two different walls, it means that one part of the room might not be accessible from the rest of the room. We thus find such paths $P_W$ and then count for each edge in those paths a certain cost according to its distance (e.g 5 for adjacent edges, 1 for proximal edges and 0 for distant edges) (limited confidence e.g. $x_{circ}$ = 0.3):

$$f_{circ}(t_{circ}) = \left\| t_{circ} - \sum_{p \in P_W} \sum_{e \in p} c(e) \right\|$$

With $t_{circ} = t_{circ} + \delta_{t_{circ}}(w_{Acc}w_{AccCirc})$

Alignment: the alignment of the furniture cannot be evaluated on the spatial relations graph, but the information about superstructures involving nodes of the graph can be used. The ratio of nodes involved in superstructures over the total number of furniture objects in the room is considered (with a mitigated confidence of $x_{align}$ = 0.5 for instance):

$$f_{align}(t_{sup}) = \left\| t_{sup} - \frac{|Obj| - |S|}{|Obj|} \right\|$$

The computation of each Key Performance Indicator value KPIV is simplified, compared the aforementioned formulas of the KPIs. Therefore, computing the set of Key Performance Indicator values is less time-consuming. The approximations introduce a more or less high uncertainty, thus applying a more or less high confidence coefficient $x_{kpi}$ compensates that uncertainty for the computation of the KPI distance $dist_{KPI}$.

In another embodiment an optimization process may be implemented on the furnished virtual 3D room proposal FP (or on the plurality of furnished virtual 3D room proposal FP, if several furnished virtual 3D room proposals FP are displayed to the user), in order to fine-tune it towards the expected preferences (step e'), figure 1).

The optimization process comprises at least one iteration of a modification of a 3D furnishing object in the furnished virtual 3D room proposal FP so as to minimize a global cost function, which is computed for each modification of a 3D furnishing object in the virtual 3D room proposal FP.

For example, the modification of a 3D furnishing object may be a displacement of a 3D furnishing object inside the valid subspace area. The new position of the 3D furnishing object can be randomly chosen, or guided by the metrics computed at each step of the optimization. Each time an object is displaced, all its depending neighbors are displaced accordingly in their new valid subspace.

Alternatively, the modification of a 3D furnishing object may be a replacement of the 3D furnishing object by another 3D furnishing object of the same category, either based on a list of substitute objects or based on data which are considered as optional attributes of the graph nodes, or based on a category of the object. In that case, the category of the 3D furnishing object corresponding to its function in the 3D room may have been previously detected. The replacement may be done as long as the new 3D furnishing object does not collide with a 3D architectural element due to its possibly different size. Its depending neighbors will be displaced accordingly to the size of the new object. If depending neighbors collide with an architectural element, the replacement is cancelled.

Alternatively, the modification of a 3D furnishing object may be a deletion of the 3D furnishing object. In particular, some objects can be defined as "optional" in the graph, which means they can be deleted. That may be the case, for example, for exclusively decorative objects.

The global cost function, which is used during the optimization process, is computed by summing the Key Performance Indicator values KPIV.

$$cost = \sum_{i=1}^{N_{kpi\_param}} \left\| (g_{kpi\_param\_i}(t_{kpi\_param\_i})) \right\|$$

With $g_{kpi\_param\_i}$ the Key Performance Indicator value KPIV, and $t_{kpi\_param\_i}$ the target parameter $t_{kpi\_param}$, and $N_{kpi\_param}$ the number of Key Performance Indicators.

In can be noted that, for purposes of computing the cost, the approximated value of the KPIs shall not be used, since the approximation of the KPI values would affect the accuracy of the optimization process.

Considering the aforementioned KPIs, (clearance, circulation, brightness, proportionality and alignment), the cost function can be written as follows:

$$cost = \left\| g_{clear}(\varepsilon_c) \right\| + \left\| g_{circ}(r_{max}) \right\| + \left\| g_{bright}(r_l) \right\| + \left\| g_{prop}(r_v) \right\| + \left\| g_{align}(t_{al}, t_{sup}) \right\|$$

The process being stochastic (even though heavily guided), several optimizations can be performed either from different spatial relations graph as initial solutions or from the same spatial relations graph, in order to obtain several satisfying furniture arrangements.

The solutions are considered valid once they have converged (either when a certain number of optimization iterations have been executed and the global cost is acceptable or when the global cost is below a certain threshold) and when there are no conflicts (overlapping) between the objects in the room. If conflicts are found, a last attempt in solving those conflicts is performed in the form of local changes at the conflict zones, either by replacing the conflicting objects with smaller available replacement objects, or by displacing one of the conflicting object just enough to solve the conflict without creating another conflict. If conflicts are persisting, the solution is considered as invalid and is not kept in the final solutions set.

The optimization process is implemented only on one graph, thus the process converges much faster than if the optimization was done on a whole set of graphs. However, the optimization may independently be implemented on a limited set of graphs.

After the optimization step e'), the result is displayed (step f)), and the user can update the user preferences, in particular if the furnished virtual 3D room proposal FP is not satisfying.

The inventive method can be performed by a suitably-programmed general-purpose computer or computer system, possibly including a computer network, storing a suitable program in non-volatile form on a computer-readable medium such as a hard disk, a solid state disk or a CD-ROM and executing said program using its microprocessor(s) and memory.

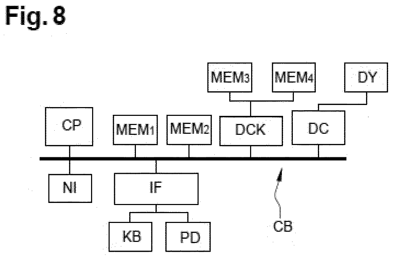

A computer suitable for carrying out a method according to an exemplary embodiment of the present invention is described with reference to figure 8. In figure 8, the computer includes a Central Processing Unit (CPU) P which performs the method step described above while running an executable program, i.e. a set of computer-readable instructions, stored in a memory device such as RAM MEM1 or ROM MEM2 or hard disk drive (HDD) MEM3, DVD/CD drive MEM4, or stored remotely. Moreover, one or more computer files defining the spatial relations graphs, and computer files comprising the furnished virtual 3D room proposals, may also be stored on one or more of memory devices MEM1 to MEM4, or remotely.

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU CP and an operating system such as Microsoft VISTA, Microsoft Windows 8, UNIX, Solaris, LINUX, Apple MAC-OS and other systems known to those skilled in the art.

CPU P can be a Xenon processor from Intel of America or an Opteron processor from AMD of America, or can be other processor types, such as a Freescale ColdFire, IMX, or ARM processor from Freescale Corporation of America. Alternatively, the CPU can be a processor such as a Core2 Duo from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer also includes a network interface NI, such as an Intel Ethernet PRO network interface card from Intel Corporation of America, for interfacing with a network, such as a local area network (LAN), wide area network (WAN), the Internet and the like. The method may be implemented remotely, by means of a web application.

The computer further includes a display controller DC, such as a NVIDIA GeForce GTX graphics adaptor from NVIDIA Corporation of America for interfacing with display DY, such as a Hewlett Packard HPL2445w LCD monitor. A general purpose I/O interface IF interfaces with a keyboard KB and pointing device PD, such as a roller ball, mouse, touchpad and the like. The display, the keyboard, the sensitive surface for the touch mode and the pointing device, together with the display controller and the I/O interfaces, form a graphical user interface, used by the user to provide input commands.

Disk controller DKC connects HDD MEM3 and DVD/CD MEM4 with communication bus CBS, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

**Claims**

1. A computer-implemented method for automatically furnishing a 3D room based on user preferences, comprising the steps of:

    a) obtaining:

       - at least one spatial relations graph (GR) of a virtual 3D room comprising 3D elements, based on spatial relations between the 3D elements of the virtual 3D room, said 3D elements comprising 3D architectural elements (3D_Arch, 1, 2, 3, 4, 11, 12, 13) and 3D furnishing objects (3D_Object, 5, 6, 7, 8, 9, 10) located in the furnished virtual 3D room;
- a set of user preferences (UP) related to the furnishing of the 3D room;

b) converting the set of user preferences (UP) into a set of target parameters ($t_{kpi\_param}$), each target parameter being assigned to a respective KPI, said KPI corresponding to a measure concerning the furnishing of the 3D room;
c) computing, for each spatial relations graph:

- a set of Key Performance Indicator values (KPIV), based on the spatial relations graph (GR) and based either on the corresponding target parameter ($t_{kpi\_param}$) or on a dataset which maps spatial relations graphs to Key Performance Indicator values with respect to each target parameter ($t_{kpi\_param}$), and
- a KPI distance ($dist_{KPI}$), which corresponds to an aggregation of all the KPI values (KPIV);

d) automatically selecting at least one most promising spatial relations graph (MPGR), said most promising spatial relations graph (MPGR) being the spatial relations graph (GR) having the lowest KPI distance ($dist_{KPI}$);
e) instantiating the most promising spatial relations graph (MPGR) into the 3D room to be furnished with the 3D furnishing objects (3D_Object, 5, 6, 7, 8, 9, 10) of the most promising spatial relations graph (MPGR), thereby providing a furnished virtual 3D room proposal (FP);
f) displaying the furnished virtual 3D room proposal (FP) to the user;
g) receiving an update of the user preferences (UP);
h) reiterating steps a) to g) until a stopping criterion is fulfilled.

2. The method according to claim 1, wherein, in step b), the target parameter $t_{kpi\_param}$ is computed with the formula:

$$t_{kpi\_param} = \max(0, \text{Proposal}_{kpi\_param} + \alpha_{kpi\_param}\delta_{kpi\_param})$$

wherein $\text{Proposal}_{kpi\_param}$ corresponds to a target parameter at the preceding iteration or a standard value for a first iteration of the method;

$$\alpha_{kpi\_param} = \sum_{p=0}^{N_{kpi}} w_p \times w_{kpi\_param};$$

$\delta_{kpi\_param}$ is a constant evolution rate;
$N_{kpi}$ is the number of user preferences impacting the Key Performance Indicator;
$w_p$ is the weight of the user preference, provided by the user;
$w_{kpi\_param}$ is the weight of the user preference on the Key Performance Indicator.

3. The method according to any of the preceding claims, comprising:

- approximating each Key Performance Indicator value (KPIV) with an a priori Key Performance Indicator value (APKPIV);
- computing a confidence coefficient ($x_{kpi}$) for each Key Performance Indicator value;

wherein, in the KPI distance ($dist_{KPI}$), each a priori Key Performance Indicator value (APKPIV) is weighted by its corresponding confidence coefficient ($x_{kpi}$).

4. The method according to any of the preceding claims, comprising, between steps e) and f), a step e') of:

- computing a global cost function (cost), the global cost function (cost) being defined by the relation:

$$cost = \sum_{i=1}^{N_{kpi\_param}} \left\| \left( g_{kpi\_param\_i}(t_{kpi\_param\_i}) \right) \right\|$$

With $g_{kpi\_param\_i}$ the Key Performance Indicator value (KPIV), and $t_{kpi\_param\_i}$ the target parameter ($t_{kpi\_param}$) for the KPI, and $N_{kpi\_param}$ the number of Key Performance Indicators;
- applying at least one iteration of a modification of a 3D furnishing object (3D_Object, 5, 6, 7, 8, 9, 10) in the furnished virtual 3D room proposal (FP) so as to minimize the global cost function.

**5.** The method according to claim 4, wherein step e') is completed when a certain number of optimization iterations have been executed and/or the global cost function is below a certain threshold, provided that there is no overlapping between the 3D furnishing objects in the room (3D_Object, 5, 6, 7, 8, 9, 10).

**6.** The method according to any of the preceding claims, wherein, said at least one spatial directed relations graph (GR) being directed and each node being connected to another node by an incoming relation or by an outgoing relation, step e) comprises the sub-steps of:

- ordering nodes of the 3D furnishing objects (3D_Object, 5, 6, 7, 8, 9, 10) by the number of incoming relations they have, then descending by the number of outgoing relations and finally by their size;
- for each node of a 3D furnishing object (3D_Object, 5, 6, 7, 8, 9, 10), according to a descending order:

- computing a valid subspace area (SS1, SS2, SS3), which is an area of the 3D room where the 3D furnishing object corresponding to the node can be instantiated, based on constraints of the 3D room;
- instantiating the 3D furnishing object in the middle of the valid subspace area (SS1, SS2, SS3).

**7.** The method according to claim 4 and 6, wherein step e') comprises one of the following operations, for at least one 3D furnishing object of the most promising spatial relations graph:

- displacement of the 3D furnishing object inside the valid subspace area (SS1, SS2, SS3);
- detection of a category of the 3D furnishing object corresponding to its function in the 3D room, and replacement of the 3D furnishing object by another 3D furnishing object of the same category, or replacement of the 3D furnishing object based on a list of substitute objects or based on data which are considered as optional attributes in the most promising spatial relations graph (MPGR);
- deletion of the 3D furnishing object.

**8.** The method according to any of the preceding claims, wherein the user preferences (UP) comprise a weighted set of parameters, said weighted set of parameters comprising at least one among the following group:

- brightness, i.e. the luminosity level the user wants for the 3D room;
- accessibility, i.e. the level of accessibility of 3D furnishing objects in the 3D room;
- occupancy, i.e. the rate of space occupancy wanted in the 3D room;
- regularity, i.e. the harmony of the repartition and alignment of the 3D furnishing objects inside the 3D room.

**9.** The method according to any of the preceding claims, comprising a step of computing a Graph Edit Distance ($dist_{G,G}$) between the most promising spatial relations graph (MPGR) and each of the at least one spatial relations graph (GR), wherein the set of users preferences (UP) comprises a satisfaction criterion, the most promising spatial relations graph (MPGR) being selected, for the next iteration, as a function of the Graph Edit Distance ($dist_{G,G}$).

**10.** The method according to any of the preceding claims, wherein the dataset which maps spatial relations graph to Key Performance Indicator values is obtained by means of a machine-learning model which takes as input a graph and outputs a value for each KPIs values considered.

**11.** The method according to any of the preceding claims, wherein, in step f), the set of Key Performance Indicator values (KPIPV) is displayed along with the furnished virtual 3D room proposal (FP).

**12.** The method according to any of the preceding claims, wherein the user preferences (UP) are updated by the user by means of sliders (SLI), each slider (SLI) corresponding to a user preference (UP).

**13.** A computer program product comprising computer-executable instructions to cause a computer system to carry out a method according to any of the preceding claims.

**14.** A non-transitory computer-readable data-storage medium (MEM1, MEM2, MEM3, MEM4) containing computer-executable instructions to cause a computer system to carry out a method according to any of claims 1 to 12.

15. A computer system comprising a processor (CP) coupled to a memory (MEM1, MEM2, MEM3, MEM4), the memory storing computer-executable instructions to cause the computer system to carry out a method according to any of claims 1 to 12.

a) spatial relations graph

c) KPITV and KPI distance
d) Selection of the most promising spatial relations graph
e) instantiation of the most promising spatial relation graph

a) user preferences

b) conversion into target parameters

e') optimization

f) display of the furnished virtual 3D room proposal

h)

g) update of the user's preferences

**Fig. 1**

EP 4 141 726 A1

GR

②

①

②

③

2
⑤ ---→ ⑥

④

| | |
|---|---|
| ——→ Front | —— Distant |
| —·—→ Back | —— proximal |
| —··→ Right | ▬▬ Adjacent |
| ----→ Left | |
| ---→ Support | |

◯ 3D_Object node

◌ 3D_Arch node

**Fig. 2**

Fig. 3

MPGR

SS1    SS2    FP

SS3

wall

door

window

10.Wardrobe
6.Bed
7-8.Lamps
9.Rug
5.Dresser

FIG. 4

**Fig. 5**

Standard target values: $t_{kpi\_param}$

$r_l = 0.5$
$r_v = 0.25$
$\varepsilon_c = 0.3$
$r_{max} = 0.2$
$t_{al} = 0$
$t_{sup} = 0.5$
$t_{circ} = 0$
$t_{clear} = 0$

instantiation

KPIs of proposal

Proportion — Circulation — Clearance — Lighting — Alignment

0 0.5

KPIV

Daily Life preferences

Occupancy
Brightness
Accessibility
Regularity

SLI

UP

Preferences

Preferences:
brightness = 0.8
Occupancy = 0
Accessibility = 0
Regularity = 0

Conversion

Standard target parameters: $t_{kpi\_param}$

$r_l = 0.58$
$r_v = 0.25$
$\varepsilon_c = 0.38$
$r_{max} = 0.28$
$t_{al} = 0$
$t_{sup} = 0.5$
$t_{circ} = 0.1$
$t_{clear} = 0.1$

Fig. 6

Fig. 7

# Fig. 8

Europäisches
Patentamt

European
Patent Office

Office européen
des brevets

# EUROPEAN SEARCH REPORT

Application Number

EP 21 30 6139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/073430 A1 (LEVY STEPHANE [IL] ET AL) 11 March 2021 (2021-03-11)<br>* paragraph [0172] *<br>* paragraph [0239] *<br>* paragraph [0501] *<br>* paragraph [0593] *<br>----- | 1-15 | INV.<br>G06F30/13<br>G06F30/27<br><br>ADD.<br>G06F111/20<br>G06F111/04 |
| X | US 2021/064792 A1 (KIM KOKEUN [KR] ET AL) 4 March 2021 (2021-03-04)<br>* paragraph [0034] *<br>* paragraph [0196] *<br>* paragraph [0199] *<br>* paragraph [0281] *<br>* paragraph [0284] *<br>* paragraph [0286] *<br>----- | 1-15 | G06F111/16<br>G06F111/06 |
| X | US 2020/134243 A1 (VARDI GUY [US] ET AL) 30 April 2020 (2020-04-30)<br>* paragraph [0055] - paragraph [0056] *<br>* paragraph [0073] *<br>* paragraph [0075] *<br>* paragraph [0098] *<br>----- | 1-15 | |

TECHNICAL FIELDS
SEARCHED      (IPC)

G06F

The present search report has been drawn up for all claims

| Place of search | Date of completion of the search | Examiner |
|---|---|---|
| Munich | 7 February 2022 | Sohrt, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 30 6139

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2022

| Patent document cited in search report | | Publication date | Patent family member(s) | | Publication date |
|---|---|---|---|---|---|
| US 2021073430 | A1 | 11-03-2021 | US 2021073430 A1 | | 11-03-2021 |
| | | | US 2021073433 A1 | | 11-03-2021 |
| | | | US 2021073434 A1 | | 11-03-2021 |
| | | | US 2021073435 A1 | | 11-03-2021 |
| | | | US 2021073440 A1 | | 11-03-2021 |
| | | | US 2021073441 A1 | | 11-03-2021 |
| | | | US 2021073442 A1 | | 11-03-2021 |
| | | | US 2021073446 A1 | | 11-03-2021 |
| | | | US 2021073447 A1 | | 11-03-2021 |
| | | | US 2021073448 A1 | | 11-03-2021 |
| | | | US 2021073449 A1 | | 11-03-2021 |
| | | | US 2021256180 A1 | | 19-08-2021 |
| | | | US 2021383037 A1 | | 09-12-2021 |
| | | | WO 2021044216 A1 | | 11-03-2021 |
| US 2021064792 | A1 | 04-03-2021 | KR 20190106867 A | | 18-09-2019 |
| | | | US 2021064792 A1 | | 04-03-2021 |
| US 2020134243 | A1 | 30-04-2020 | US 2020134243 A1 | | 30-04-2020 |
| | | | WO 2020092811 A1 | | 07-05-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER KAN et al.** Automated Interior Design Using a Genetic Algorithm. *Proceedings of VRST2017,* November 2017
- **PAUL MERRELL et al.** Interactive Furniture Layout Using Interior Design Guidelines. Siggraph, August 2011
- **WANG, K. et al.** PlanIT: planning and instantiating indoor scenes with relation graph and spatial prior networks. *ACM Trans. Graph.,* July 2019, vol. 38 (4
- **ZEINA ABU-AISHEH.** *An Exact Graph Edit Distance Algorithm for Solving Pattern Recognition Problems*